# EUROPEAN PATENT APPLICATION

(11) **EP 0 791 810 A2**
(43) Date of publication of application: **27.08.1997**
(21) Application number: 97660015.5
(22) Date of filing: 19.02.1997
(51) Int. Cl.: G01F 23/18

(54) **Equipment for measuring the volume of malted beverage packed in a large tank**

(30) Priority: 21.02.1996 FI 960776
(71) Applicant: Nissinen, Jarmo, 50600 Mikkeli (FI); Järvinen, Esa, 50600 Mikkeli (FI)
(72) Inventor: Nissinen, Jarmo, 50600 Mikkeli (FI); Järvinen, Esa, 50600 Mikkeli (FI)
(74) Representative: Helke, Kimmo Kalervo

(57) **Abstract**

The object of the invention is equipment for measuring the volume of malted beverages packed in a bag (12) in a large tank (11), in which gas pressure is led to the tank (11) along a pressure feed line (15). In the equipment, the bag (12) is connected by means of a special connection (10) to a detachable pipe bend (14) through the bottom connection (9) of the tank (11), which connection seals both the liquid connection from the bag (12) to the pipe connection (14) and the gas volume of the tank (11) from the environment. According to the invention, a pressure difference sensor (16) is installed in the pipe bend (14), the reference pressure line (32) of which is connected to the aforesaid pressure feed line (15), when the volume is determined in a manner that is as such known using the pressure difference.

## Description

The object of the invention is equipment for measuring the volume of malted beverages packed in a bag in a large tank, in which gas pressure is led to the tank through a pressure feed line, and in which the bag is connected by means of a special connection through the bottom connection of the tank to a detachable pipe bend, which connection seals both the liquid connection from the bag to the pipe bend and the gas volume of the tank from the environment.

Particularly in the retail sales of large amounts of beer, restaurants use large tanks, which generally have a volume of 1000 litres, are equipped with a cooling jacker, and in which the beer is stored in a plastic bag. Before the tank is filled, a new plastic bag is always placed in it, which is usually connected to the outlet pipe of the tank by means of a suitable sleeve. Compressed air or another compressed gas is led to the upper part of the tank, so that the beer is forced to flow out of the bag in the tank. The connection pipes from the tank are connected to the aforesaid outlet pipe, which is generally, for practical reasons, a detachable component. There are two small windows in the pressure tank to permit inspection of the amount of liquid. This manual operation has been slow and inaccurate. In addition, the aforesaid plastic bag has hindered the measurement of the volume of liquid. Many different kinds of meters have been developed for the measurement of liquid as such, but until now there has been no practical solution to the measurement of the volume of liquid in large tanks.

One general-purpose liquid surface level meter is known from International Application Publication WO 90/08303, but this is difficult to apply to the aforesaid large beer tanks, because liquid pressure cannot be obtained from the bottom of the tank, because of the protective plastic bag. US Patent Publication 4,602,344 presents a similar surface level meter for a tank. Thus, surface level meters that are as such different have been presented, but they cannot be directly applied to large beer tanks.

The intention of this invention is to create a new type of equipment for measuring the volume of beer and other beverages stored in large refrigerated tanks. The characteristic features of the invention appear in the accompanying Patent Claims. When the measurement of the quantities in several tanks is combined using equipment according to the invention, considerable advantages are gained. Not only is the determination of the volume accelerated, but also the result is more accurate. It is then possible to optimally determine the batches to be ordered and thus avoid disturbances in distribution. In addition, the invention can be easily applied to the large tanks in use at present.

In what follows, the invention is described in detail by reference to the accompanying drawings showing one application of the invention, in which,
- Figure 1: shows diagrammatically the equipment according to the invention,
- Figure 2: shows a pipe bend according to the invention attached to a tank,
- Figure 3: shows an axonometric view of the installation of the pressure difference sensor in the pipe bend,
- Figure 4: shows a cross-section of the connection between the bottom connection and the pipe bend, and
- Figure 5: shows the pressure difference sensor in detail in partial cross-section.

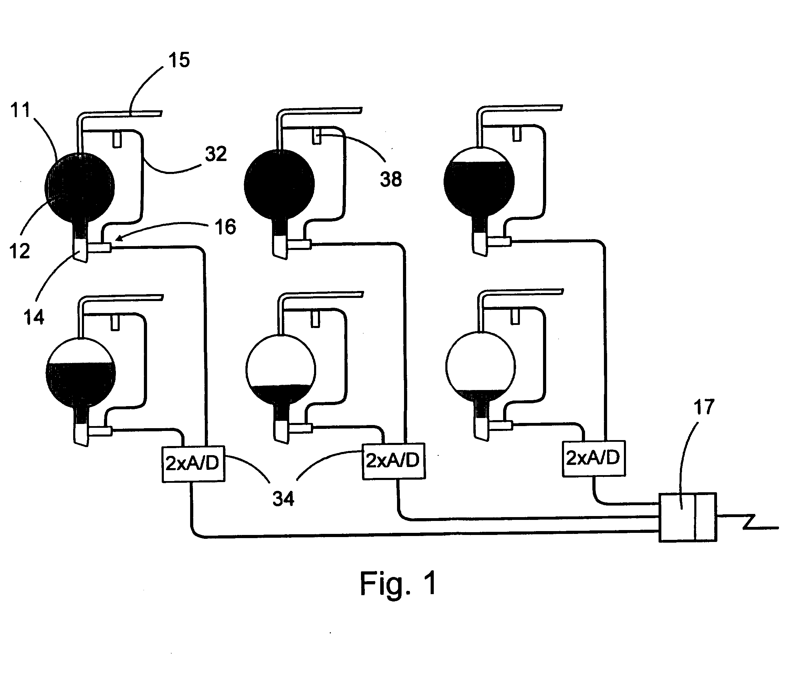

Figure 1 shows one consumption point, for example, the store-room of a restaurant, in which in this example there are six large tanks 11 and a pipe bend 14 attached to them. To measure the surface level, pipe bend 14 has pressure difference sensor 16 attached to it, to which reference pressure is led from compressed air connection 15 through reference pressure line 32. In addition, in this application two pressure difference sensors 16 are connected to a single analog card 34, in which there are two input and two A/D connections to transfer data in turn to the central unit 17. There may even be fewer analog cards 34, because the number of them depends on the number of INPUT and OUTPUT connections on the cards. Central unit 17 receives all the data lines from the A/D converters 34. By means of these, the central unit 17 collects in its memory the individual quantity data from all six tanks as a continuous measurement. The data in the central unit can be opened and analysed with a microcomputer. New ordering data for deliveries of malted beverages can be derived from the quantity data after error analysis.

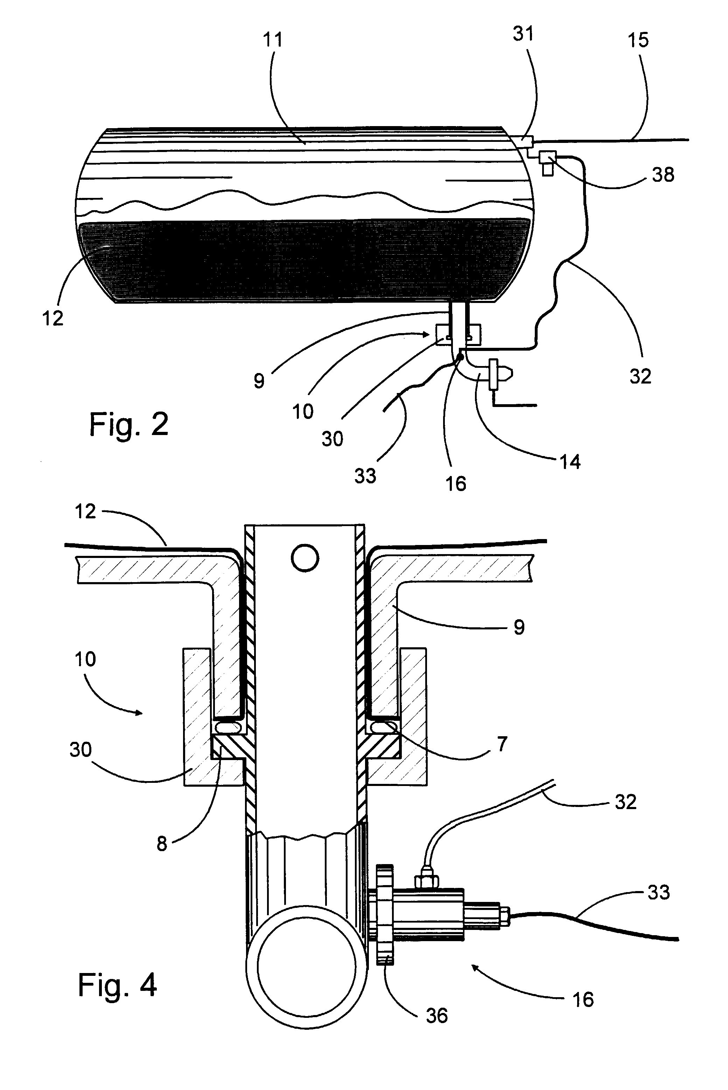

Figure 2 shows one large tank 11 in the example equipment and the pipe bend 14 attached to its bottom connection 9, the upper part of which is connected to plastic bag 12 by means of sleeve 30. In each tank 11 of the equipment, there is an aforesaid plastic bag 12 for the hygienic storage of beer. The upper part of tank 11 has a pressure feed line 15 led to it, the compressed air from which presses the beer through the pipe bend 14 to the distribution line. Connection 31 is connected to pressure feed line 15, from which a flexible reference pressure line 32 leads to pressure difference sensor 16, which is later described in detail. The reference pressure line 32 also has a water trap 38. Though the compressed air network usually has its own water traps, water trap 38 is important should the plastic bag 12 puncture. If this happens, water trap 38 prevents beer from entering pressure difference sensor 16, while normally it traps water that may be in the compressed air.

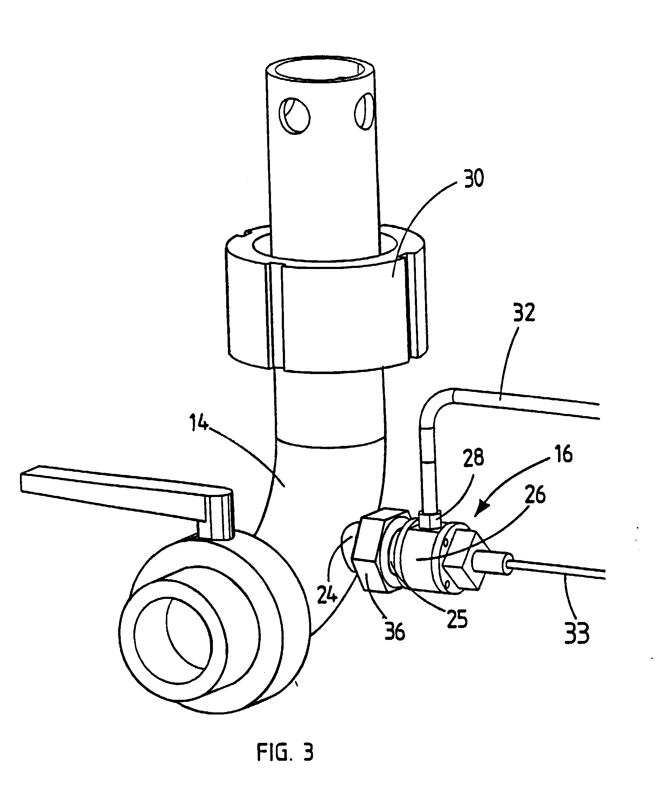

Figure 3 shows the pressure difference sensor 16 set in the pipe bend 14. Pipe bend 14 has a branch connection 24 permanently welded to it, to which pressure difference sensor 16 is attached by means of a snap connector 36. The snap connector 36 may be the snap connection device shown here or else a suitable nut. The electrical connection 33 and compressed air connection 32 of the pressure difference sensor 16 are flexible, to permit the removal of the pipe bend 14.

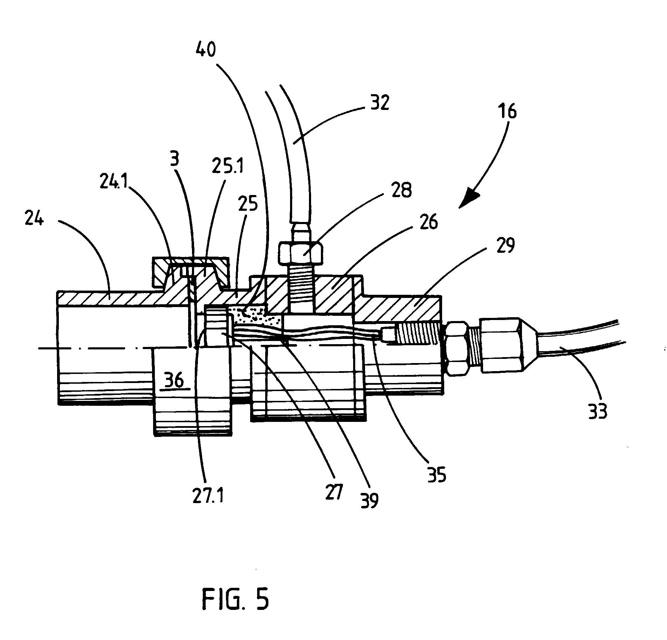

Figure 4 shows connection 10 between the bottom connection 9 and pipe bend 14. When threaded sleeve 30 is screwed in, it compresses plastic ring 7 of the plastic bag 12 between bottom connection 9 and the shoulder 8 of the pipe bend 14. In this way, pipe bend 14 is attached and the connection 10 sealed in a single operation.

Figure 5 shows the construction of the pressure difference sensor 16 in detail. The pressure difference sensor 16 is in semi-cross-section in Figure 5, when the actual pressure difference sensor component is marked with the reference number 27 and its membrane with the number 27.1, the latter receiving the pressure to be recognized. In the branch connection 24 and the first body component 25 there are bevelled flange components 24.1 and 25.1, on top of which in this case is a lever-operated snap-fit band (Baltzer-Pfeiffer B8080105SN). Another alternative would be to use an even more conventional nut attachment to connect the flanges. There is a gasket 3 between the branch connection 24 and the body component 25. The electrical leads from the pressure difference sensor component 27 can be seen in channel 35.

The piezoelectric pressure difference sensor (NPI-19A201GH, Lucas-Novas) 27 is placed in the first body component 25, to which it is secured by means of the second body component 26. Body components 25, 26 form a channel, closed by pressure difference sensor component 27, extending to the branch connection 24. The gas space thus formed is led through connection 28 to compressed air connection 32 in the manner described. Liquid pressure in the pipe bend then acts on one side of the pressure difference sensor component 27 and the input pressure of compressed air connectionl5, which is also the pressure of the upper level of the liquid surface, on the other side. This pressure difference is thus the hydrostatic pressure of the liquid surface, from which the level of the liquid can be calculated and from the level in turn the amount of liquid, once the geometry of tank 11 is known.

The actual body of the sensor 25, 26 and the rear piece 29 are made from plastic, advantageously polyacetal plastic. This plastic is impact and wear resistant, smooth, hygienic and easily worked. In addition, this plastic retains its shape and dimensions in spite of changes in moisture. In this case, the properties of polyacetal plastic make it eminently suitable for use alongside stainless steel in large tanks. In addition, the poor thermal conductivity of this plastic prevents the condensation phenomenon that is often associated with a steel sensor body. This is because a plastic sensor body 25, 26 prevents cold reaching the sensor component 27 from the pipe bend 14. Electrical connection 33 is attached to rear piece 29 of the sensor body 25, 26 so that the connection is gas-tight.

In addition, channel 35 is filled with resin 40, so that the electrical connections of the pressure difference sensor component 27 are covered, but that airlink between membrane 27.1 and connection 28 is preserved. Thus, should moisture condense on the pressure difference sensor 16, detrimental short-circuits are prevented. Epoxy resin, for example, can be used for this covering. Airlink is ensured by using a model of sensor, in which there is a pipe 39 that remains almost entirely within the resin 40. The protection of the electrical connections by filling channel 35 with resin 40 then becomes more reliable and easier to perform.

Equipment according to the invention can be adapted to one or more large tanks. In addition, the pipe bend 14 can be adapted to plastic tanks that differ from the example. In such a case, the correspondence between the pressure difference sensor 16 and the quantity of liquid in the tank is calibrated simply before use by means of a program. Remote operation of the equipment can also be easily implemented with modern technology.

## Claims

1. Equipment for measuring the volume of malted beverages packed in a bag (12) in a large tank (11), in which gas pressure is led to the tank (11) along a pressure feed line (15), and in which the bag (12) is connected by means of a special connection (10) to a detachable pipe bend (14) through the bottom connection (9) of the tank (11), which connection seals both the liquid connection from the bag (12) to the pipe connection (14) and the gas volume of the tank (11) from the environment, characterized in that a pressure difference sensor (16) is installed in the pipe bend (14), the reference pressure line (32) of which is connected to the aforesaid pressure feed line (15), when the volume is calculated in a manner that is as such known using the pressure difference.

2. Equipment according to Claim 1, characterized in that there is a branch connection (24) for the pressure difference sensor (16), to which the sensor body (25, 26) is arranged to be detachably secured.

3. Equipment according to Claim 2, characterized in that the aforesaid branch connection (24) and the sensor body (25, 26) have opposing flanges (24.1, 25.1) equipped with a gasket, which are arranged to be connected with either a nut or compressing snap-fit connector (36).

4. Equipment according to one of Claims 1 - 3, characterized in that the electrical connection (33) from the pressure difference sensor (16) and the reference pressure line (32) are flexible, to permit the pipe bend (14) to be detached.

5. Equipment according to Claim 3 or 4, characterized in that the pressure difference sensor component (27) is sealed in the sensor body (25, 26) in such a way that it separates the liquid on the pipe bend (14) side and the gas led into the sensor body (25, 26) from each other.

6. Equipment according to Claim 4 or 5, characterized in that the sensor body (25, 26) includes a central channel (35) extending to the branch connection (24), which the pressure difference sensor component (27) closes, and a connection (28) for connecting an external compressed air connection (32) to the channel (35).

7. Equipment according to one of Claims 4 - 6, characterized in that the sensor body (25, 26) is advantageously of plastic, in order to prevent moisture in the compressed air from condensing on the pressure difference sensor (16).

8. Equipment according to one of Claims 4 - 7, characterized in that all the electrical connections of the pressure difference sensor component (27) are covered with resin (40).

9. Equipment according to one of Claims 1 - 8, characterized in that the pressure difference sensor is of the piezo-electric type and that the electrical signal of the pressure difference sensor (16) is connected to an A/D converter (34) to transmit the measurement result to the central unit (17).

10. Equipment according to one of Claims 1 - 9, characterized in that there is a water trap (38) in the reference pressure line (32).
